# EUROPÄISCHE PATENTSCHRIFT

(11) **EP 1 642 489 B1**
(45) Veröffentlichungstag und Bekanntmachung des Hinweises auf die Patenterteilung: **13.02.2008**
(21) Anmeldenummer: 05017088.5
(22) Anmeldetag: 05.08.2005
(51) Int. Cl.: A01F 12/22, A01D 61/00

(54) **Mitnehmer auf einer Zuführtrommel eines selbstfahrenden Mähdreschers**
Feeding element at a feeding drum of a self-propelled combine harvester
Elément entraîneur sur un tambour d'introduction d'une moissonneuse-batteuse autromatrice

(30) Priorität: 30.09.2004 DE 102004048084
(43) Veröffentlichungstag der Anmeldung: 05.04.2006
(73) Patentinhaber: CLAAS Selbstfahrende Erntemaschinen GmbH, 33428 Harsewinkel (DE)
(72) Erfinder: van de Sluis, Jan, 33428 Harsewinkel (DE); Speckamp, Dirk, 59073 Hamm (DE); Terörde, Stefan, 48231 Warendorf (DE); Dammann, Martin, 33428 Harsewinkel (DE)

(56) Entgegenhaltungen:
- EP-A- 0 836 800
- DE-C- 10 705
- DE-C1- 3 827 256
- GB-A- 1 149 188
- US-A- 2 463 061
- US-A- 4 487 005

## Beschreibung

Die Erfindung betrifft einen selbstfahrenden Mähdrescher gemäß dem Oberbegriff des Anspruchs 1.

In der EP 0 836 800 B1 wird eine erste Zuführtrommel offenbart, die aus auf einer Achse aneinandergereihter Zuführsegmenten zusammengesetzt ist. Die Zuführsegmente sind im wesentlichen viereckig und zueinander versetzt drehfest auf der Achse angeordnet. Jede Ecke des Zuführsegmentes weist zur Verstärkung eine verbreiterte Dreschkappe auf.

Nachteilig an dieser Ausführung der Zuführtrommel ist zum einen der kostenintensive und hohe Fertigungsaufwand, da jedes Segment einzeln gefertigt und auf der Achse angeordnet werden muss. Zudem verschlechtern die breit ausgeführten Kappen den Drusch des Ernteguts, weil die breite Wirkfläche der Kappen eine hohe Reibung an dem Erntegut erzeugen und aufgrund dieser Reibung oftmals ein hoher Bruchkornanteil verursacht wird. Schließlich führt das großflächige Beaufschlagen des Ernteguts bei ungünstigen Erntebedingungen zu dem teilweise Abreißen der gesamten Ähre, so dass die Abscheidung des Korns nachhaltig beeinträchtigt wird.

Es ist daher Aufgabe der zugrundeliegenden Erfindung einen selbstfahrenden Mähdrescher mit einer Zuführtrommel mit darauf angeordneten Mitnehmern zu schaffen, die das Erntegut dreschen und fördern ohne eine Beschädigung des Ernteguts zu verursachen.

Diese Aufgabe wird erfindungsgemäß durch das kennzeichnende Merkmal des Patentanspruchs 1 gelöst, wobei in den weiteren Patentansprüchen Merkmale aufgeführt sind, die diese Lösung in vorteilhafter Weise weiterentwickeln.

Durch die keilförmige und angeschrägte Ausbildung der Wirkfläche der auf der Zuführtrommel angeordneten Mitnehmer wird das Erntegut besonders schonend angenommen, gedroschen und an die nachgeordnete Dreschtrommel übergeben.

Die schonende Bearbeitung des Ernteguts wird zusätzlich erhöht, indem die Wirkfläche der Mitnehmer entgegen der Drehrichtung der Zuführtrommel angeschrägt ist.

Die Austauschbarkeit der Mitnehmer bewirkt eine zeit- und kostengünstige Wartung der Zuführtrommel, da lediglich einzelne beschädigte oder verschlissene Mitnehmer und nicht die gesamte Zuführtrommel ausgetauscht werden müssen.

Indem die Mitnehmer nachgebend ausgeführt sind, wird das Erntegut noch sanfter druckbeaufschlagt. Die nachgebenden Mitnehmer können beispielsweise aus weichem Gummi hergestellt werden, so dass sich der beim Dreschvorgang häufig auftretende Kornbruchanteil minimiert.

In vorteilhafter Weise sind den Mitnehmern Kappen zugeordnet. Die Kappen dienen dazu die Mitnehmer vor Verschleiß zu schützen.

Außerdem können die den Mitnehmern zugeordneten Kappen austauschbar sein. Hierdurch können defekte oder verschlissene Kappen einfach ersetzt werden.

Dadurch, dass die Kappen unterschiedlich geformte geometrische Wirkflächen aufweisen, können unterschiedliche Erntegutarten und unterschiedliche Reifegrade des Ernteguts optimal bearbeitet werden.

Diese unterschiedlich geformten geometrischen Wirkflächen der Kappen können spitz, gerade, mehreckig und/oder profiliert ausgeführt sein. Die gerade Wirkfläche eignet sich besonders für trockenes Erntegut, da die geraden Wirkflächen die für trockenes Erntegut zusätzlich erforderliche Reibung auf das Erntegut besser übertragen als spitze Wirkflächen. Ein noch höherer Reinigungs- und Drescheffekt wird durch die Profilierung der Wirkflächen erreicht. Die spitze Wirkfläche hingegen eignet sich für eine sanfte Bearbeitung des Ernteguts, da das Erntegut mit einer kleinen Wirkfläche beaufschlagt und ein Quetschen des Ernteguts fast ausgeschlossen wird.

Indem die Kappen verstellbar bzw. drehbar sind, können die verschlissenen Wirkflächen der Kappen in eine Außerbetriebsstellung und die noch nicht beanspruchten und unversehrten Wirkflächen der Kappen in eine Betriebsstellung verdreht werden. Insgesamt wird hierdurch der Verbrauch an Kappen auf einfache Weise reduziert.

Schließlich können die Kappen nachgebend ausgeführt sein. Die nachgebende Ausführung kann durch den Einsatz von elastischen Kappen, wie beispielsweise Gummi, erreicht werden. Hierdurch wird das Erntegut besonders sanft bearbeitet, ohne dass die sanfte Bearbeitung nachhaltig den Dresch- und Förderprozess beeinflusst.

Weitere vorteilhafte Ausgestaltungen sind Gegenstand weiterer Unteransprüche und werden nachfolgend anhand von Zeichnungen näher erläutert.

Es zeigen:
- Figur 1:: einen schematischen Querschnitt durch eine als Mähdrescher ausgeführte landwirtschaftliche Arbeitsmaschine und deren Arbeitsaggregate
- Figur 2:: eine Zuführtrommel mit unterschiedlichen erfindungsgemäßen Mitnehmern

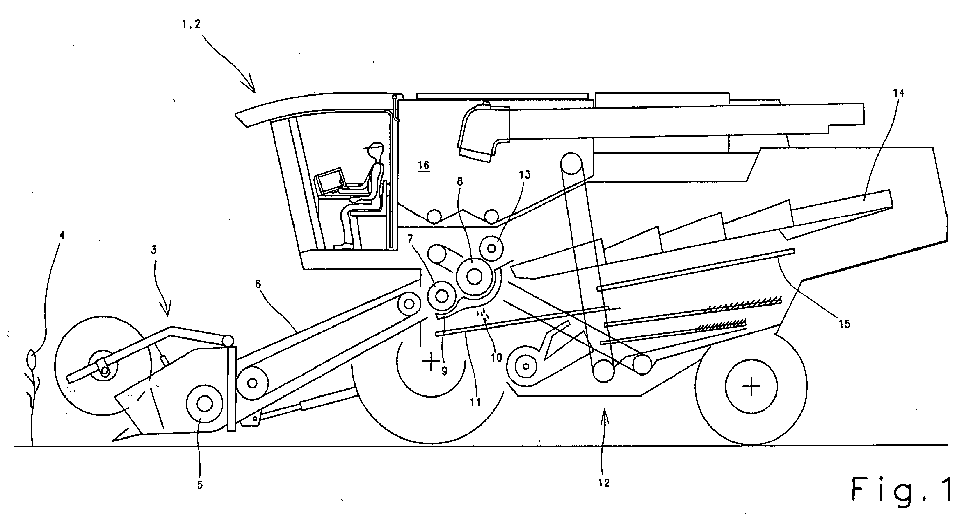

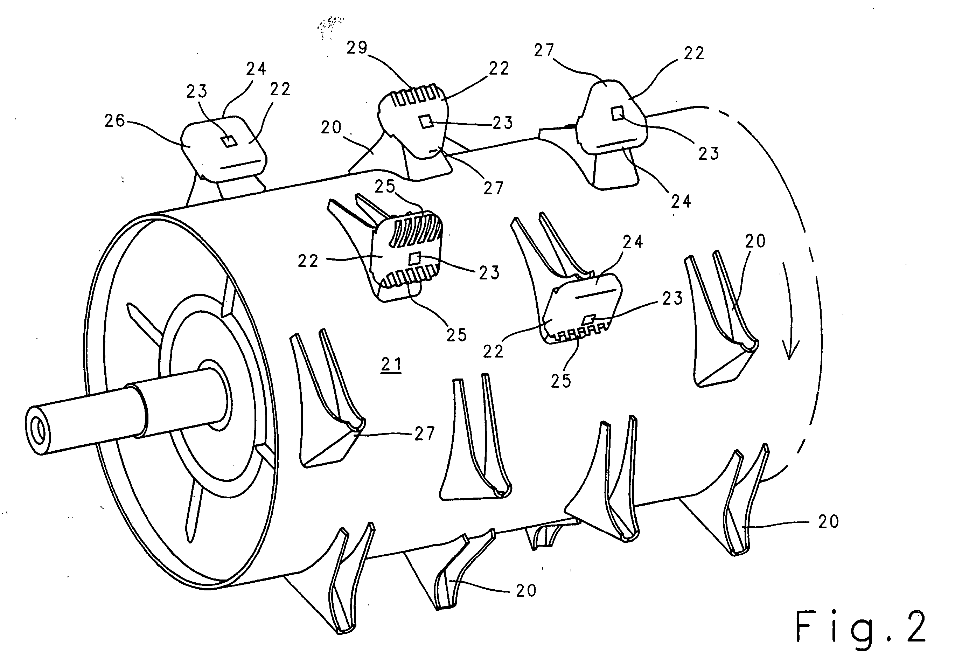

In der Figur 1 ist eine als selbstfahrender Mähdrescher 1 ausgeführte landwirtschaftliche Arbeitsmaschine 2 in schematischer Querschnittdarstellung abgebildet. In dem frontseitigen Bereich des Mähdreschers 1 ist ein Schneidwerk 3 angeordnet, welches das Erntegut 4 aufnimmt, schneidet und es mittels eines Förderorgans 5 an den nachgeordneten Schrägförderer 6 übergibt. Am Ende des Schrägförderers sind unterschiedliche Arbeitsaggregate 7, 8, 9 angeordnet, die das Erntegut 4, beispielsweise Weizen, annehmen. Die unterschiedlichen Förder- und Arbeitsaggregate 7, 8, 9 haben die Aufgabe das Erntegut 4 aufzubereiten und an weitere Maschinenaggregate zu übergeben. Hierbei beschleunigt die vorliegend im Tangentialfluss arbeitende und gegen den Uhrzeigersinn rotierende Zuführtrommel 7 die Erntegutmatte und übernimmt neben der Förderfunktion gleichzeitig eine Dreschfunktion. Ferner schlägt die Zuführtrommel 7 die Erntegutmatte auseinander und erzeugt, für eine verbesserte Abscheidung, eine dünnere und gleichmäßigere Erntegutmatte. Die besondere Ausgestaltung der Zuführtrommel 7 wird anhand der Figur 2 nachfolgend noch detaillierter beschrieben.

Der Zuführtrommel 7 ist eine Dreschtrommel 8 nachgeordnet. Die Dreschtrommel 8 beaufschlagt das Erntegut 4 und drischt die Körner 10 aus dem Erntegut 4, so dass das Erntegut 4 in ein Korn-Spreu-Gemisch und ein aus ausgedroschenen Halmen bestehenden Gutstrom geteilt wird. Die ausgedroschenen Körner 10 werden durch den unterhalb der Dreschtrommel 8 angeordneten Dreschkorb 9 in an sich bekannter Weise über einen Vorbereitungsboden 11 zu einer Reinigungseinrichtung 12 gefördert, die die Körner 10 von den restlichen Nichtkornbestandteilen trennt. Hinter der gegen den Uhrzeigersinn rotierenden Dreschtrommel 8 ist eine gegen den Uhrzeigersinn rotierende Wendetrommel 13 angeordnet, die den aus ausgedroschenen Halmen bestehenden Gutstrom auf eine als Hordenschüttler 14 ausgeführte Nachabscheideeinrichtung fördert. Der sich oszillierend bewegende Hordenschüttler 14 trennt dabei die restlichen im Gutstrom vorhandenen Körner 10 die über einen Rücklaufboden 15 ebenfalls in die Reinigungseinrichtung 12 gelangen, bevor das gereinigte Korn 10 in den Korntank 16 des Mähdreschers 1 gelangt. Durch die oszillierende Bewegung des Hordenschüttlers 14 wird das Stroh zudem aus dem rückwärtigen Bereich des Mähdreschers 1 gefördert und auf dem Feldboden abgelegt.

In Figur 2 ist die Zuführtrommel 7 mit erfindungsgemäßen Mitnehmern 20 abgebildet.

Vorliegend weist die Zuführtrommel 7 einen geschlossenen Trommelmantel 21 auf. Die Mitnehmer 20 sind ortsfest mit dem Trommelmantel 21 verbunden. Es liegt im Rahmen der Erfindung beliebig viele Mitnehmer 20 in einer symmetrischen oder asymmetrischen Anordnung auf dem Trommelmantel 21 anzuordnen. Erfindungsgemäß laufen die in Drehrichtung der Zuführtrommel 7 angeschrägten Wirkflächen der Mitnehmer 20 zu ihrem Ende hin spitz zu, so dass die Wirkflächen der Mitnehmer 20 insgesamt keilformartig ausgebildet sind.

Aufgrund dieser keilformartigen Ausbildung haben die Mitnehmer 20 eine kleine Wirkfläche mit der das Erntegut 4 beaufschlagt wird. Insbesondere eignet sich der Einsatz der Mitnehmer 20 mit keilförmiger Wirkfläche bei gerade gereiftem Erntegut 4, da dieses Erntegut 4 besonders empfindlich ist und bei einer zu starken Beaufschlagung, wie beispielsweise durch breit ausgeführte Mitnehmerwirkflächen oder durch allgemein bekannte und hier nicht abgebildete Dreschleisten, zu stark belastet wird. Durch den Einsatz von Mitnehmern 20 mit keilförmiger Wirkfläche wird demgemäss das Erntegut 4 verbessert angenommen und beschleunigt, da die Mitnehmer 20 mit keilförmiger Wirkfläche greifend und nicht reibend das Erntegut 4 annehmen und an die dahinterliegende Dreschtrommel 8 übergeben. Durch die kleinere Wirkfläche und die sanfte Förderung des Ernteguts wird weniger Bruchkorn und Kurzstroh produziert und ein Abschlagen von ganzen Ähren wird vermieden. Insbesondere abgerissene Ähren bewirken eine schlechte Kornsauberkeit, da sie oftmals direkt in den Korntank 16 wandern. Für den Fall, dass die Ähren als Überkehr erneut der Dreschtrommel 8 zugeführt werden, wird darüber hinaus der Dreschprozess unnötig belastet.

Es liegt im Rahmen der Erfindung die Mitnehmer 20 austauschbar auf der Zuführtrommel 7 anzuordnen. Durch die Austauschbarkeit der Mitnehmer 20 können insbesondere verschlissene Mitnehmer 20 mühelos ersetzt oder auch den Erntebedingungen angepasst werden.

Eine besonders schonende Annahme und Förderung des Ernteguts 4 wird durch die nachgebende Ausführung der Mitnehmer 20 erreicht. Diese nachgebende Ausführung kann beispielsweise durch weiche Gummimitnehmer erreicht werden. Vorstellbar wären jedoch auch Mitnehmer 20, die bei einer starken Druckbeaufschlagung in den Trommelmantel 21 hineinwandern und bei nachlassender Druckbeaufschlagung wieder in ihre Ausgangsstellung zurück kehren. Fertigungstechnisch ist aber auch jede andere Art von Material zur Herstellung der Mitnehmer 20 vorstellbar.

Wie sich aus Figur 2 ergibt können den Mitnehmern 20 Kappen 22 zugeordnet werden.

Die Kappen 22 können durch allgemein bekannte Befestigungselemente 23 mit den Mitnehmer 20 verbunden und gelöst werden. Hierdurch sind die Kappen 22 beliebig oft und einfach austauschbar.

Aufgabe der Kappen 22 ist, die Mitnehmer 20 vor Verschleiß zu schützen sowie unterschiedliches Erntegut 4 optimal zu fördern und zu bearbeiten. Darüber hinaus ist bei jeder Emtefahrt der unterschiedliche Reifegrad des Ernteguts 4 zu beachten, der einen unterschiedlichen Drusch erforderlich macht. Aus diesem Grund können unterschiedliche geometrische Formen von Kappen 22 verwendet werden. Beispielsweise können Kappen 22 mit einer geraden, spitzen, mehreckigen und/oder profilierten geometrischen Wirkfläche 24 verwendet werden. Die Verwendung von geraden Wirkflächen 24 ist vor allem unter trockenen Erntebedingungen sinnvoll, da trockenes Erntegut 4 zur besseren Bearbeitung eine höhere Reibung erfordert. Die geraden Wirkflächen 24 können außerdem als profilierte Wirkflächen 25 ausgeführt werden. Die Profilierung der Wirkflächen 25 verbessert zusätzlich den Dresch- und Reinigungseffekt.

Durch die Verstellbarkeit der Kappen 22 können die Kappen 22 auf einfache Weise verdreht werden, so dass jederzeit unterschiedliche geometrische Wirkflächen zum Einsatz gebracht werden können. Durch die Verdrehbarkeit der Kappen 22 kann die Kappe 20 länger benutzt werden, da die verschlissene Wirkflächen 25 verdreht und gegen die gegenüberliegende unbenutzte Wirkfläche 24 ausgetauscht werden kann.

Eine weitere geometrische Ausführungsform der Kappen 22 ist eine dreieckige Ausführungsform, die sich in etwa der keilartige Form der Mitnehmer 20 anpasst. Durch die Dreiecksform der Kappe 26 können spitze Wirkflächen 27 - und durch die Verdrehbarkeit der Kappe 26 - gerade Wirkflächen 24 zum Einsatz gebracht werden. Auf diese Weise können die zuvor beschriebenen Vorteile einer spitzen Wirkfläche 27 und einer geraden Wirkfläche 24 erreicht werden.

Alternativ kann die gerade Wirkfläche 28 auch als profilierte Wirkfläche 29 ausgeführt sein und zur Bearbeitung des Ernteguts 4 in Arbeitsstellung verstellt werden.

Auf fertigungstechnisch einfache Weise können die Kappen 22 aus unterschiedlichen Materialien ausgeführt sein. Insbesondere hat sich eine Kappe 22 aus weichem Gummi in der Praxis bewährt. Durch die weiche Gummikappe geben die Kappen 22 bei der Beaufschlagung des Ernteguts 4 nach. Die nachgebende Kappe 22 bietet den Vorteil einer sehr schonenden Bearbeitung des Ernteguts 4, so dass wenig Bruchkorn oder beschädigtes Stroh produziert wird.

Es liegt im Rahmen des Könnens eines Fachmanns das beschriebene Ausführungsbeispiel in nicht dargestellter Weise abzuwandeln oder in anderen Maschinen einzusetzen, um die beschriebenen Effekte zu erzielen, ohne dabei den Rahmen der Erfindung zu verlassen.

### Bezugszeichenliste:

- 1: Selbstfahrender Mähdrescher
- 2: landwirtschaftliche Arbeitsmaschine
- 3: Schneidwerk
- 4: Erntegut
- 5: Förderorgan
- 6: Schrägförderer
- 7: Zuführtrommel
- 8: Dreschtrommel
- 9: Dreschkorb
- 10: Körner
- 11: Vorbereitungsboden
- 12: Reinigungseinrichtung
- 13: Wendetrommel
- 14: Hordenschüttler
- 15: Rücklaufboden
- 16: Korntank
- 20: Mitnehmer
- 21: Trommelmantel
- 22: Kappen
- 23: Befestigungselemente
- 24: gerade Wirkfläche
- 25: profilierte gerade Wirkfläche
- 26: Kappe
- 27: spitze Wirkfläche
- 29: profilierte gerade Wirkfläche

## Patentansprüche

1. Selbstfahrender Mähdrescher mit einer mit Mitnehmern bestückten Zuführtrommel zum Beschleunigern, Dreschen und Fördern des Emteguts und mit einer der Zuführtrommel nachgeordneten Dreschtrommel,
**dadurch gekennzeichnet, dass**
die Wirkfläche der Mitnehmer (20) keilförmig und angeschrägt ausgebildet sind.

2. Selbstfahrender Mähdrescher nach Anspruch 1,
**dadurch gekennzeichnet, dass**
die Wirkflächen der Mitnehmer (20) entgegen der Drehrichtung der Zuführtrommel (7) angeschrägt sind.

3. Selbstfahrender Mähdrescher nach einem oder mehreren der vorangegangenen Ansprüche,
**dadurch gekennzeichnet, dass**
die Mitnehmer (20) austauschbar auf dem Zuführtrommel (7) angeordnet sind.

4. Selbstfahrender Mähdrescher nach einem oder mehreren der vorangegangenen Ansprüche,
**dadurch gekennzeichnet, dass**
die Mitnehmer (20) nachgebend ausgeführt sind.

5. Selbstfahrender Mähdrescher nach einem oder mehreren der vorangegangenen Ansprüche,
**dadurch gekennzeichnet, dass**
den Mitnehmern (20) Kappen (22) zugeordnet sind.

6. Selbstfahrender Mähdrescher nach einem oder mehreren der vorangegangenen Ansprüche,
**dadurch gekennzeichnet, dass**
die den Mitnehmern (20) zugeordneten Kappen (22) austauschbar sind.

7. Selbstfahrender Mähdrescher nach einem oder mehreren der vorangegangenen Ansprüche,
**dadurch gekennzeichnet, dass**
die Kappen (22) unterschiedlich geformte geometrische Wirkflächen (24, 25, 27, 28, 29) aufweisen.

8. Selbstfahrender Mähdrescher nach Anspruch 7,
**dadurch gekennzeichnet, dass**
die geometrischen Wirkflächen (24, 25, 27, 28, 29) der Kappen (22) spitz, gerade, mehreckig und/oder profiliert sind.

9. Selbstfahrender Mähdrescher nach einem oder mehreren der vorangegangenen Ansprüche,
**dadurch gekennzeichnet, dass**
die Kappen (22) verstellbar sind.

10. Selbstfahrender Mähdrescher nach einem oder mehreren der vorangegangenen Ansprüche,
**dadurch gekennzeichnet, dass**
die Kappen (22) nachgebend ausgeführt sind.

## Claims

1. A self-propelled combine harvester comprising a feed drum equipped with entrainment members for accelerating, threshing and conveying the crop material and a threshing drum arranged downstream of the feed drum,
**characterised in that**
the operative surfaces of the entrainment members (20) are of a wedge-shaped and bevelled configuration.

2. A self-propelled combine harvester according to claim 1 **characterised in that** the operative surfaces of the entrainment members (20) are bevelled in opposite relationship to the direction of rotation of the feed drum (7).

3. A self-propelled combine harvester according to one or more of the preceding claims **characterised in that** the entrainment members (20) are arranged replaceably on the feed drum (7).

4. A self-propelled combine harvester according to one or more of the preceding claims **characterised in that** the entrainment members (20) are of a yielding configuration.

5. A self-propelled combine harvester according to one or more of the preceding claims **characterised in that** caps (22) are associated with the entrainment members (20).

6. A self-propelled combine harvester according to one or more of the preceding claims **characterised in that** the caps (22) associated with the entrainment members (20) are replaceable.

7. A self-propelled combine harvester according to one or more of the preceding claims **characterised in that** the caps (22) have geometrical operative surfaces (24, 25, 27, 28, 29) of different shapes.

8. A self-propelled combine harvester according to claim 7 **characterised in that** the geometrical operative surfaces (24, 25, 27, 28, 29) of the caps (22) are pointed, straight, polygonal and/or profiled.

9. A self-propelled combine harvester according to one or more of the preceding claims **characterised in that** the caps (22) are adjustable.

10. A self-propelled combine harvester according to one or more of the preceding claims **characterised in that** the caps (22) are of a yielding configuration.

## Revendications

1. Moissonneuse-batteuse automotrice avec un tambour d'amenée équipé de taquets d'entraînement, destiné à accélérer, battre et transporter le produit de récolte, et avec un tambour de battage monté en aval du tambour d'amenée, **caractérisée en ce que** la surface active des taquets d'entraînement (20) est de forme conique et inclinée.

2. Moissonneuse-batteuse automotrice selon la revendication 1, **caractérisée en ce que** les surfaces actives des taquets d'entraînement (20) sont inclinées à l'opposé du sens de rotation du tambour d'amenée (7).

3. Moissonneuse-batteuse automotrice selon une ou plusieurs des revendications précédentes, **caractérisée en ce que** les taquets d'entraînement (20) sont montés sur le tambour d'amenée (7) de manière amovible.

4. Moissonneuse-batteuse automotrice selon une ou plusieurs des revendications précédentes, **caractérisée en ce que** les taquets d'entraînement (20) sont configurés de manière à pouvoir céder.

5. Moissonneuse-batteuse automotrice selon une ou plusieurs des revendications précédentes, **caractérisée en ce que** les taquets d'entraînement (20) sont associés à des coiffes (22).

6. Moissonneuse-batteuse automotrice selon une ou plusieurs des revendications précédentes, **caractérisée en ce que** les coiffes (22) associées aux taquets d'entraînement (20) peuvent être remplacées.

7. Moissonneuse-batteuse automotrice selon une ou plusieurs des revendications précédentes, **caractérisée en ce que** les coiffes présentent des surfaces actives géométriques de formes différentes (24, 25, 27, 28, 29).

8. Moissonneuse-batteuse automotrice selon la revendication 7, **caractérisée en ce que** les surfaces actives géométriques (24, 25, 27, 28, 29) des coiffes (22) sont pointues, rectilignes, polygonales et/ou profilées.

9. Moissonneuse-batteuse automotrice selon une ou plusieurs des revendications précédentes, **caractérisée en ce que** les coiffes (22) sont réglables.

10. Moissonneuse-batteuse automotrice selon une ou plusieurs des revendications précédentes, **caractérisée en ce que** les coiffes (22) sont configurées de manière à pouvoir céder.
